# NEW EUROPEAN PATENT SPECIFICATION

(11) **EP 2 146 055 B2**
(45) Date of publication and mention of the opposition decision: **19.01.2022**
(45) Mention of the grant of the patent: 28.11.2012
(21) Application number: 08425486.1
(22) Date of filing: 17.07.2008
(51) Int. Cl.: F01D 5/08, F01D 5/30, F01D 11/00, F01D 25/12

(54) **Sealing element for a gas turbine, a gas turbine including said sealing element and method for cooling said sealing element**
Dichtungselement für Gasturbinen, Gasturbine mit besagtem Dichtungselement und Verfahren zum Kühlen besagten Dichtungselements
Élément d'étanchéité pour une turbine à gaz, turbine à gaz dotée dudit élément d'étanchéité et procédé de refroidissement dudit élément d'étanchéité

(43) Date of publication of application: 20.01.2010
(73) Proprietor: ANSALDO ENERGIA S.P.A., 16152 Genova (IT)
(72) Inventor: Traverso, Stefano, 16145 Genova (IT)
(74) Representative: Bergadano, Mirko

(56) References cited:
- EP-A- 0 801 208
- EP-A2- 0 801 208
- EP-A2- 1 959 101
- WO-A1-01/00965
- WO-A1-2007/028703
- DE-A1- 19 950 109
- DE-A1- 19 950 109
- DE-T2- 69 713 502
- US-A- 3 834 831
- US-A- 6 065 932
- US-A- 6 065 932
- US-A1- 2007 080 505

## Description

The present invention relates to a sealing element for a gas turbine, to a gas turbine including said sealing element and to a method for cooling said sealing element.

Gas turbines of known type generally include a rotating shaft, extending along a longitudinal axis, with a plurality of rotor rings connected thereto, each of which is centered on the longitudinal axis. Each rotor ring is coupled to a plurality of rotor blades radially arranged about the rotor ring.

Specifically, each rotor ring is provided with a plurality of essentially equally spaced seats, which axially extend along the peripheral edge of the rotor ring. Each seat is adapted to be engaged by an end portion of a corresponding rotor blade by means of an axially sliding prismatic coupling. This type of coupling between the blade and the rotor ring ensures, when the turbine is running, an appropriate fastening of the blade in a radial direction, but allows the blade end portion to be displaced in the axial direction. Therefore, the axial movement of the end portions of the blades must be prevented. Such an object is generally reached by using sealing elements, which are circumferentially arranged side-by-side to essentially form a sealing ring and which are fixed to the rotor ring and to one or more rotor blades, on one or both of the annular faces of the rotor ring.

The sealing elements further contribute to correctly cool the rotor blades because they protect the end portions of the rotor blades from the hot working fluid in the gas turbine. Each sealing element indeed includes a wall having an external face in contact with the hot working fluid in the gas turbine and an internal face in contact with the cooling fluid of the gas turbine. Sealing elements of this kind are disclosed in documents US-A-6065932 and DE-A-19950109. However, the sealing elements are often subjected to overheating, because the contact with the cooling fluid along the internal face is not sufficient to ensure an adequate cooling of the whole sealing element. Specifically, the sealing element is provided with an upper edge adapted to be coupled to the rotor blade, which is particularly subject to overheating because it is subjected to a fairy high heat load due to its position close to the flow area of the hot working fluid. Such an upper edge reaches very high temperatures and undergoes plastic deformations due to the overheating and to the simultaneous action of the centrifugal force which cause a sort of welding of the sealing element onto the rotor blade. This implies great difficulties, for example, during the operations of disassembling the sealing elements, because very often it is necessary to resort to operations which damage the sealing elements and risk damaging the rotor blade as well.

It is an object of the present invention to make an efficient gas turbine wherein an appropriate cooling of the upper edge of the sealing element is ensured. In accordance with such objects, the present invention further relates to a gas turbine according to claim 1.

Further features and advantages of the present invention will be apparent from the following description of a non-limitative embodiment thereof, with reference to the figures in the accompanying drawings, in which:
- figure 1 is a perspective view, with parts in section and parts removed for clarity, of a first detail of the gas turbine according to the present invention;
- figure 2 is a perspective view, with parts removed for clarity, of a second detail of the gas turbine according to the present invention;
- figure 3 is a perspective view of a sealing element according to the present invention;
- figure 4 is a perspective view, with parts removed for clarity, of a detail of a sealing element made according to a different embodiment of the present invention.

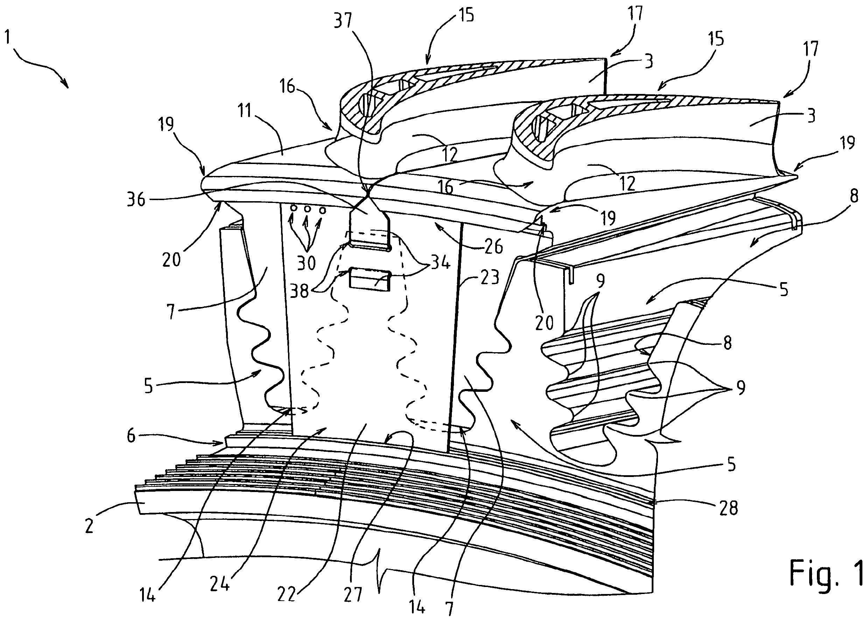

In figure 1, reference numeral 1 indicates a portion of a gas turbine including a rotor ring 2 (only partially shown), which is centered on a longitudinal axis (not shown in the accompanying figures) and is coupled to a plurality of rotor blades 3 radially arranged about the rotor ring 2.

The rotor ring 2 is provided with a plurality of essentially equally spaced seats 5, which axially extend along a peripheral edge 6 of the rotor ring 2. Each seat 5 is adapted to be engaged by an end portion 7 of a corresponding rotor blade 3 by means of a sliding prismatic coupling; specifically, each seat 5 has two side walls 8, respectively provided with three axial undercuts 9 adapted to prevent the movement of the end portion 7 of the blade 3 in the radial direction when the turbine 1 is running.

Each blade 3 includes, as mentioned above, an end portion 7, a platform 11, integrally coupled to the end portion 7, and an elongated main body 12, which extends from the platform 11 at the opposite side with respect to the end portion 7.

The end portion 7 of each blade 3 may be inserted in the corresponding seat 5 of the rotor ring 2 in a direction parallel to the axis of the rotor ring 2. Specifically, the end portion 7 has a shape essentially complementary to the shape of the corresponding seat 5 of the rotor ring 2, but has a lower radial height than the radial height of the seat 5 so that, when the seat 5 is engaged, the end portion 7 forms a channel 14 for the passage of a cooling fluid, preferably air bled from the compressor (not shown) of the gas turbine 1.

The end portion 7 of each blade 3 is further provided with one or more internal channels (not shown in the accompanying figures), which face the channel 14 and provide to cool the end portion 7 itself and to feed a complex system of cooling channels 15 (only one of which is partially shown in figure 1) of the main body 12.

The platform 11 of each blade 3 has two axially opposite peripheral portions 19, which axially exceed with respect to the end portion 7. A peripheral portion 19 of the platform 11 is provided, on the side facing the end portion 7, with a circumferential groove 20. A variant (not shown) of the present invention provides for both peripheral portions 19 having a circumferential groove 20, on the side facing the end portion 7.

The main body 12 of each blade 3 includes a tip (not shown for simplicity in the accompanying figures), opposite to the end portion 7, a leading edge 16 and a trailing edge 17.

The gas turbine 1 further includes a plurality of sealing elements 22 (only one of which is shown in figure 1 for simplicity), which are adapted to be coupled to the rotor ring 2 and to the blades 3 and arranged side-by-side in the circumferential direction to contribute to fasten the end portions 7 of the blades 3 in the axial direction and to correctly cool the end portions 7 of the blades 3. In the non-limitative example shown in the accompanying figures, the sealing elements 22 are arranged side-by-side in the circumferential direction on only one annular face of the rotor ring 2. A variant (not shown) of the present invention provides for the sealing elements 22 being arranged side-by-side in the circumferential direction on both annular faces of the rotor ring 2.

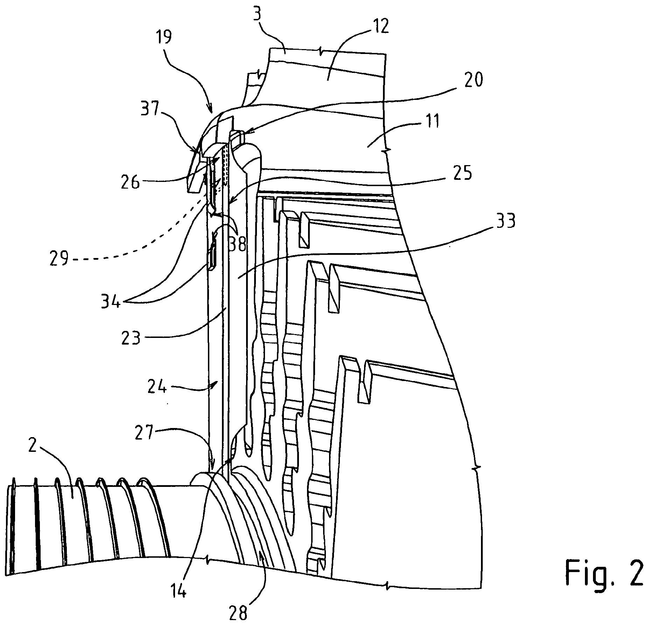

With reference to figures 1 and 2, each sealing element 22 includes an essentially rectangle-shaped wall 23, which has an external face 24 adapted to be arranged in use in contact with the hot working fluid in the turbine and an internal face 25 adapted to be arranged in use in contact with the cooling fluid from the channel 14.

With reference to figure 2, the wall 23 has an upper edge 26 adapted to engage the circumferential groove 20 of the platform 11 of at least one blade 3; in the example of the accompanying figures, the sealing element 22 is arranged straddled on two blades 3 and therefore the upper edge 26 engages the circumferential groove 20 of a blade 3 and the circumferential groove 20 of the adjacent blade 3.

The wall 23 has a lower edge 27 adapted to engage a corresponding portion of a circumferential seat 28 made in the rotor ring 2.

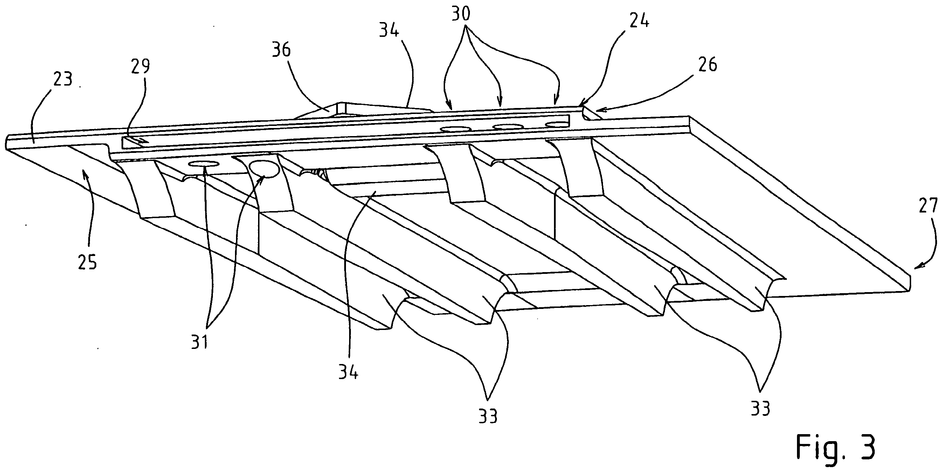

With reference to figures 2 and 3, the wall 23 includes a gap 29, which is travelled through by the cooling fluid from the channel 14 and flowing in the space between the sealing element 22 and the end portion 7 of the blade 3 facing thereto.

Specifically, the gap 29 communicates with the hot working fluid in the gas turbine through one or more outlets 30 (figures 1 and 3) made in the external face 24 close to the upper edge 26 and with the cooling fluid through one or more inlets 31 (figure 3) made in the internal face 25 close to the upper edge 26.

The inlets 31 and the outlets 30 are reciprocally and circumferentially offset.

In the non-limiting example described and illustrated herein, the outlets 30 are three holes, which are essentially adjacent and circular in section, while the inlets 31 are two holes, which are essentially adjacent and circular in section. It is understood that the number and/or shape and/or size of the inlets 31 which feed the gap 29 may be varied to calibrate the amount of cooling fluid as required (high performing machines, more or less thermally loaded turbine stages, etc.). Similarly, the number and/or shape and/or size of the outlets 30 may also be varied as required.

In the non-limiting example described and illustrated herein, the gap 29 is open at the upper edge 26 of the wall 23 and deeply extends into the wall 23 for a length preferably equal to about 1/25 of the total length of the wall 23, between the upper edge 26 and the lower edge 27.

Each sealing element 22 further includes a plurality of ribs 33 and a blocking element 34.

The ribs 33 extend from the internal face 25 of the wall 23, essentially for the entire length of the wall 23 between the upper edge 26 and the lower edge 27, are parallel to each other, and essentially orthogonal to the upper edge 26 of the wall 23. The ribs 33 act to structurally stiffen the sealing element 22 so as to make it sufficiently strong to support the action of the centrifugal force and the pressure difference to which the sealing element 22 is subjected when the gas turbine 1 is running.

With reference to figure 1, the blocking element 34 is essentially an elongated foil, integrally connected to the wall 23 of the sealing element 22 and having a tip-shaped end 36 adapted to be arranged in a corresponding seat 37. The shape of the seat 37 is complementary to the end 36 and is defined by the peripheral portions 19 of the platforms 11 of two adjacent blades 3. Specifically, the blocking element 34 is C-folded to allow the passage of the blocking element 34 through two essentially adjacent slots 38, of the external face 24 of the wall 23. The blocking element 34 prevents the movement of the sealing element 22 in the circumferential direction.

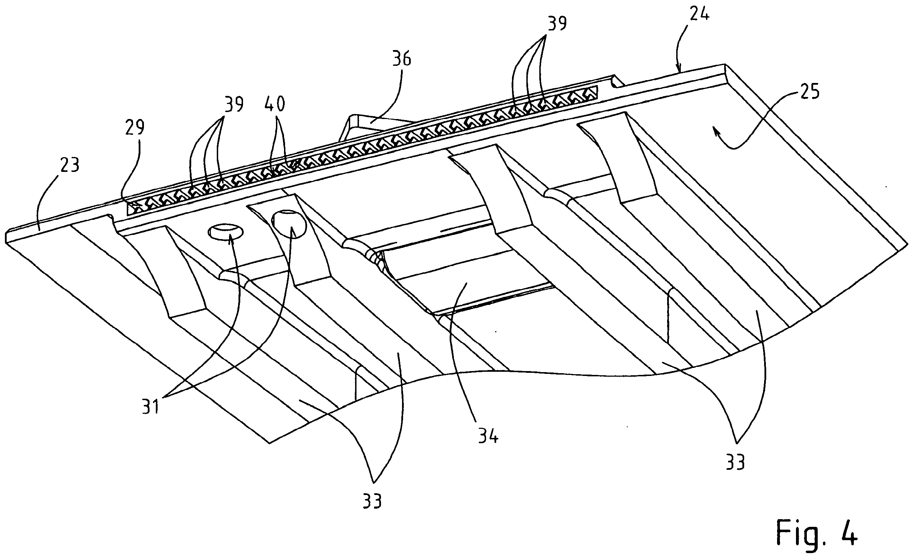

Figure 4 shows a variant of the sealing element 22, according to which the gap 29 is provided with a plurality of fins 39 which protrude from two corresponding internal faces 40 parallel to the internal face 25 of the wall 23 for increasing the heat exchange surface.

In the example shown in figure 4, the fins 39 are arranged transversally to the corresponding faces 40.

Once all the sealing elements 22 have been coupled to the corresponding blades 3 and to the rotor ring 2, in use, the cooling fluid from the channels 14 of each blade 3 enters the gap 29 of each sealing element 22 through the inlets 31 and exits from the gap 29 through the outlets 30. The cooling fluid determines a cooling by convection of the area close to the upper edge 26 when passing inside the gap 29 (possibly increased by the presence of the fins 39) and a cooling by convection of the platform 11 of the rotor blades 3 and of the seat 37 of the blocking element 34 exiting from the outlets 30.

The present invention has the following advantages.

Firstly, in virtue of the particular shape of the sealing element 22 according to the present invention, the disassembly interventions of the rotor blades 3 are easier, faster and most cost-effective because the correct cooling of the upper edge 26 of the sealing element 22 eliminates the problems related to plastic deformations of the upper edge 26.

Furthermore, in virtue of the sealing element 22 according to the present invention, it is possible to increase the operating temperature of the working fluid in the gas turbine 1 and, accordingly, increase the performance of the entire gas turbine 1.

Additionally, the production costs of the sealing element 22 may be reduced in virtue of the good cooling of the upper edge 26, reached by means of the particular shape of the sealing element 22, which no longer imposes the use of materials having high mechanical features.

Furthermore, the risks of failure of the whole gas turbine 1 caused be the sealing element 22 exiting from its seat due to thermal-mechanical deformation is minimized. This further determines an increase of the time span between a maintenance intervention and the next of the sealing elements 22.

Finally, the sealing element 22 according to the present invention is adapted to be installed on any type of gas turbine, also on previously installed gas turbines.

It is finally apparent that changes and variations may be made to the sealing element, to the gas turbine and to the method for cooling the sealing element described herein, without departing from the scope of the appended claims.

## Claims

1. A gas turbine including at least one rotor ring (2) and at least a plurality of rotor blades (3) radially arranged about the rotor ring (2) and having an end portion (7) fixed to the rotor ring (2); the gas turbine (1) comprising at least one sealing element (22), which includes a wall (23), coupled to the rotor ring (2) and to at least one rotor blade (3), and is provided with an external face (24), arranged in contact with a hot working fluid in the gas turbine (1), and with an internal face (25) arranged in contact with a cooling fluid of the gas turbine (1);
the wall (23) having a gap (29), which is the space defined between the external face (24) and the internal face (25) and which, in use, is travelled through by the cooling fluid; the wall (23) having a lower edge (27) adapted to engage a circumferential seat (28) made in the rotor ring (2); the gas turbine (1) being **characterized in that** it comprises a plurality of ribs (33), which extend from the internal face (25) of the wall (23); wherein the wall (23) has an upper edge (26) adapted to engage a corresponding circumferential groove (20) of a rotor blade (3); the gap (29) substantially extending close to the upper edge (26); wherein the internal face (25) of the wall (23) is provided with at least one inlet (31) for feeding the gap (29) with the cooling fluid of the gas turbine (1) and the external face (24) of the wall (23) is provided with at least one outlet (30) for communicating the gap (29) with the hot working fluid of the gas turbine (1); the inlet (31) and the outlet (30) are circumferentially offset.

2. A gas turbine according to claim 1, **characterized in that** the inlet (31) is arranged on the internal face (25), essentially close to the upper edge (26) .

3. A gas turbine according to claim 1, **characterized in that** the outlet (30) is arranged on the external face (24), essentially close to the upper edge (26) .

4. A gas turbine according to anyone of the foregoing claims, **characterized in that** the gap (29) is open at the upper edge (26) of the wall (23).

5. A gas turbine according to anyone of foregoing claims, **characterized in that** the gap (29) deeply extends into the wall (23) for a length equal to about 1/25 of the entire length of the wall (23) between the upper edge (26) and the lower edge (27).

6. A gas turbine according to anyone of the foregoing Claims, **characterized in that** the ribs (33) are parallel to each other and essentially orthogonal to the upper edge (26) of the wall (23); the ribs (33) essentially extending for the entire length of the wall (23) between the upper edge (26) and the lower edge (27) .

7. A gas turbine according to anyone of the foregoing claims, **characterized in that** it includes a blocking element (34) integrally connected to the wall (23) of the sealing element (22) and having a tip-shaped end (36), adapted to be arranged in a corresponding seat (37) defined by two adjacent rotor blades (3).

8. A gas turbine according to anyone of the foregoing claims, **characterized in that** the gap (29) is provided with a plurality of fins (39) which extend from two corresponding internal faces (40) of the gap (29).

9. A gas turbine according to claim 8, **characterized in that** the fins (39) are transversally arranged with respect to the corresponding faces (40).

## Patentansprüche

1. Gasturbine, umfassend zumindest einen Rotorring (2) und zumindest eine Vielzahl von Rotorblätter (3), die radial um den Rotorring (2) angeordnet sind und einen an dem Rotorring (2) befestigten Endabschnitt (7) besitzen; wobei die Gasturbine (1) zumindest ein Dichtelement (22) aufweist, das eine Wand (23), die mit dem Rotorring (2) und zumindest einem Rotorblatt (3) gekoppelt ist, umfasst und mit einer außenseitigen Fläche (24), die in Kontakt mit einem heißen Arbeitsfluid in der Gasturbine (1) steht, und mit einer innenseitigen Fläche (25), die in Kontakt mit einem Kühlfluid der Gasturbine (1) steht, versehen ist;
wobei die Wand (23) einen Spalt (29) besitzt, der gleich dem zwischen der außenseitigen Fläche (24) und der innenseitigen Fläche (25) festgelegten Raum entspricht, und durch den bei der Benutzung das Kühlfluid wandert, und wobei die Wand (23) einen unteren Rand (27) besitzt, der für den Eingriff mit einem in Umfangsrichtung verlaufenden Sitz (28), der in dem Rotorring (2) gebildet ist, angepasst ist, und wobei die Gasturbine (1) **dadurch gekennzeichnet ist, dass** sie eine Vielzahl von Rippen (33) aufweist, die sich von der innenseitigen Fläche (25) der Wand (23) erstrecken; wobei die Wand (23) einen oberen Rand (26) besitzt, der für den Eingriff mit einer entsprechenden in Umfangsrichtung verlaufenden Nut (20) eines Rotorblattes (3) angepasst ist, wobei der Spalt (29) sich im Wesentlichen bis nahezu an den oberen Rand (26) erstreckt; wobei die innenseitige Fläche (25) der Wand (23) mit zumindest einem Einlass (31) zum Zuführen des Kühlfluids der Gasturbine (1) in den Spalt (29) versehen ist und wobei die außenseitige Fläche (24) der Wand (23) mit zumindest einem Auslass (30) zum Herstellen einer Verbindung zwischen dem Spalt (29) und dem heißen Arbeitsfluid der Gasturbine (1) versehen ist; der Einlass (31) und der Auslass (30) sind in Umfangsrichtung zueinander versetzt.

2. Gasturbine nach Anspruch 1, **dadurch gekennzeichnet, dass** der Einlass (31) an der innenseitigen Fläche (25) im Wesentlichen nahe dem oberen Rand (26) angeordnet ist.

3. Gasturbine nach Anspruch 1, **dadurch gekennzeichnet, dass** der Auslass (30) an der außenseitigen Fläche (24) im Wesentlichen nahe dem oberen Rand (26) angeordnet ist.

4. Gasturbine nach einem der vorhergehenden Ansprüche, **dadurch gekennzeichnet, dass** der Spalt (29) an dem oberen Rand (26) der Wand (23) offen ist.

5. Gasturbine nach einem der vorhergehenden Ansprüche, **dadurch gekennzeichnet, dass** der Spalt (29) sich tief in die Wand (23) über eine Länge, die ungefähr 1/25 der gesamten Länge der Wand (23) zwischen dem oberen Rand (26) und dem unteren Rand (27) entspricht, erstreckt.

6. Gasturbine nach einem der vorhergehenden Ansprüche, **dadurch gekennzeichnet, dass** die Rippen (23) parallel zueinander und im Wesentlichen orthogonal zu dem oberen Rand (26) der Wand (23) sind, wobei die Rippen (33) sich im Wesentlichen über die gesamte Länge der Wand (23) zwischen dem oberen Rand (26) und dem unteren Rand (27) erstrecken.

7. Gasturbine nach einem der vorhergehenden Ansprüche, **dadurch gekennzeichnet, dass** sie ein Blockierelement (34) umfasst, das integral mit der Wand (23) des Dichtelements (22) verbunden ist und ein spitzenförmiges Ende (36) besitzt, das dafür angepasst ist, um in einem entsprechenden Sitz (37), der durch zwei benachbarte Rotorblätter (3) festgelegt ist, angeordnet zu werden.

8. Gasturbine nach einem der vorhergehenden Ansprüche, **dadurch gekennzeichnet, dass** der Spalt (29) mit einer Vielzahl von Flügel (39) versehen ist, die sich von den entsprechenden innenseitigen Flächen (40) des Spalts (29) erstrecken.

9. Gasturbine nach Anspruch 8, **dadurch gekennzeichnet, dass** die Flügel (39) in transversaler Richtung in Bezug auf die entsprechenden Flächen (40) angeordnet sind.

## Revendications

1. Turbine à gaz comportant au moins une bague de rotor (2) et au moins une pluralité d'aubes de rotor (3) radialement disposées autour de la bague de rotor (2) et ayant une partie d'extrémité (7) fixée à la bague de rotor (2) ; la turbine à gaz (1) comprenant au moins un élément d'étanchéité (22), qui comporte une paroi (23), couplée à la bague de rotor (2) et à au moins une aube de rotor (3), et est muni d'une face extérieure (24), disposée en contact avec un fluide de travail chaud dans la turbine à gaz (1), et d'une face intérieure (25) disposée en contact avec un fluide de refroidissement de la turbine à gaz (1) ;
la paroi (23) comprenant un intervalle (29), qui est l'espace défini entre la face extérieure (24) et la face intérieure (25) et qui est traversé par le fluide de refroidissement au cours de l'utilisation ; la paroi (23) ayant un bord inférieur (27) adapté pour s'engager avec une assise circonférentielle (28) réalisée dans la bague de rotor (2) ; la turbine à gaz (1) étant **caractérisée en ce qu'**elle comprend une pluralité de nervures (33), qui s'étendent à partir de la face intérieure (25) de la paroi (23) ; dans laquelle la paroi (23) présente un bord supérieur (26) adapté pour s'engager avec une rainure circonférentielle correspondante (20) d'une aube de rotor (3) ; l'intervalle (29) s'étendant essentiellement à proximité du bord supérieur (26) ; dans laquelle la face intérieure (25) de la paroi (23) est pourvue d'au moins un orifice d'entrée (31) pour alimenter l'intervalle (29) avec le fluide de refroidissement de la turbine à gaz (1), et la face extérieure (24) de la paroi (23) est pourvue d'au moins un orifice de sortie (30) pour mettre l'intervalle (29) en communication avec le fluide de travail chaud de la turbine à gaz (1) ; l'orifice d'entrée (31) et l'orifice de sortie (30) sont décalés au niveau de la circonférence.

2. Turbine à gaz selon la revendication 1, **caractérisée en ce que** l'orifice d'entrée (31) est disposé sur la face intérieure (25), essentiellement à proximité du bord supérieur (26).

3. Turbine à gaz selon la revendication 1, **caractérisée en ce que** l'orifice de sortie (30) est disposé sur la face extérieure (24), essentiellement à proximité du bord supérieur (26).

4. Turbine à gaz selon l'une quelconque des revendications précédentes, **caractérisée en ce que** l'intervalle (29) est ouvert au niveau du bord supérieur (26) de la paroi (23).

5. Turbine à gaz selon l'une quelconque des revendications précédentes, **caractérisée en ce que** l'intervalle (29) s'étend en profondeur dans la paroi (23) sur une longueur égale à environ 1/25 de la longueur totale de la paroi (23) entre le bord supérieur (26) et le bord inférieur (27).

6. Turbine à gaz selon l'une quelconque des revendications précédentes, **caractérisée en ce que** les nervures (33) sont parallèles les unes aux autres et essentiellement perpendiculaires au bord supérieur (26) de la paroi (23) ; les nervures (33) s'étendant essentiellement sur toute la longueur de la paroi (23) entre le bord supérieur (26) et le bord inférieur (27).

7. Turbine à gaz selon l'une quelconque des revendications précédentes, **caractérisée en ce qu'**elle comporte un élément de blocage (34) relié d'un seul tenant à la paroi (23) de l'élément d'étanchéité (22) et présentant une extrémité en forme de pointe (36), adapté pour être disposé dans une assise correspondante (37) définie par deux aubes adjacentes de rotor (3).

8. Turbine à gaz selon l'une quelconque des revendications précédentes, **caractérisée en ce que** l'intervalle (29) est pourvu d'une pluralité d'ailettes (39) qui s'étendent à partir de deux faces intérieures correspondantes (40) de l'intervalle (29).

9. Turbine à gaz selon la revendication 8, **caractérisée en ce que** les ailettes (39) sont disposées transversalement par rapport aux faces correspondantes (40).
